# FASCICULE DE BREVET EUROPEEN

(11) **EP 2 557 340 B1**
(45) Date de publication et mention de la délivrance du brevet: **19.07.2023**
(21) Numéro de dépôt: 12290261.2
(22) Date de dépôt: 31.07.2012
(51) Int. Cl.: G05D 23/13, F16K 11/16, F16K 31/00

(54) **MITIGEUR THERMOSTATIQUE MONOCOMMANDE À OUVERTURE PRIORITAIRE EN EAU FROIDE PUIS POUR LA DISTRIBUTION D'EAU SANITAIRE À UNE TEMPÉRATURE DONNÉE**
THERMOSTATISCHES EINHANDMISCHVENTIL FÜR DIE ABGABE ZUERST VON KALTEM WASSER UND DANACH FÜR DIE ABGABE VON MISCHWASSER BIS ZU EINER BESTIMMTEN TEMPERATUR
THERMOSTATIC ONE HANDLE MIXING VALVE FOR PRIORITARY APERTURE OF COLD WATER AND THEN FOR THE DISTRIBUTION OF MIXED WATER TO A GIVEN TEMPERATURE

(30) Priorité: 08.08.2011 FR 1102475
(43) Date de publication de la demande: 13.02.2013
(73) Titulaire: Delabie, 80130 Friville Escarbotin (FR)
(72) Inventeur: Normand, Marcel, 80820 Arrest (FR)
(74) Mandataire: Cabinet Chaillot

(56) Documents cités:
- EP-A1- 2 141 394
- EP-A1- 2 202 603
- WO-A2-2004/068252
- DE-A1- 1 953 646
- GB-A- 1 108 580
- US-A- 4 607 788
- US-A1- 2005 116 053

## Description

La présente invention est relative à un mitigeur thermostatique monocommande à ouverture prioritaire en eau froide.

Les mitigeurs thermostatiques actuels sont très souvent du genre assurant une ouverture simultanée de l'eau froide et de l'eau chaude : l'utilisateur ne peut donc agir que sur l'ajustement de la température souhaitée. Ceci a notamment pour inconvénient majeur que la température minimale de l'eau délivrée n'en autorise pas une utilisation comme eau potable, puisque la température de l'eau ainsi délivrée est trop élevée. Un exemple de ce type de robinet est décrit dans le brevet américain n° 5.370.305.

D'autres types de mitigeurs comportent deux manettes : une pour le réglage de débit, et une autre pour le réglage de la température de l'eau délivrée. Un exemple d'un tel robinet mitigeur est décrit dans le document GB-2.246.188-A.

Ainsi, les mitigeurs connus ont généralement pour inconvénient de nécessiter deux manettes de commande, une pour le débit d'eau, l'autre pour le réglage de la température : lorsqu'on ouvre le débit, on obtient de l'eau à la température présélectionnée. Un mitigeur thermostatique monocommande est décrit dans le document EP2202603 A.

Aussi un des buts de la présente invention est-il de fournir un mitigeur thermostatique monocommande, c'est-à-dire avec une seule manette de commande, dont l'actionnement provoque une ouverture prioritaire de l'eau froide seule, puis en continuant la rotation de cette manette, l'eau devient plus chaude jusqu'à une température prédéterminée.

Ce but, ainsi que d'autres qui apparaîtront par la suite, est atteint par un mitigeur thermostatique monocommande selon la revendication 1.

De préférence, un écrou mâle est vissé dans le porte clapet pour limiter la course de la douille de réglage.

Avantageusement, une vis de réglage est disposée dans la douille de réglage et vient en appui sur le piston de l'élément sensible pour permettre l'étalonnage du thermostat.

De préférence, le porte-clapet coopère avec la tige de commande par un filetage.

Avantageusement, un guidage tel qu'une cannelure est ménagé entre le clapet et le corps de tête pour assurer la translation du porte-clapet lors de la rotation de la tige de commande.

De préférence, la tige de commande est creuse ce qui permet d'introduire une clé jusqu'à la vis de réglage.

Avantageusement, une chemise en matière isolante peut être disposée à l'intérieur du corps entre le fond intérieur de ce corps et un épaulement ménagé dans la partie médiane de l'enveloppe de cartouche, juste au-dessus du passage d'entrée eau chaude, de cette manière le contact de l'eau chaude avec le corps du robinet sera considérablement réduit.

De préférence, une vis radiale assure le maintient de la manette sur la tige de commande.

La description qui va suivre et qui ne comporte aucun caractère limitatif, doit être lue en regard des figures suivantes, parmi lesquelles :

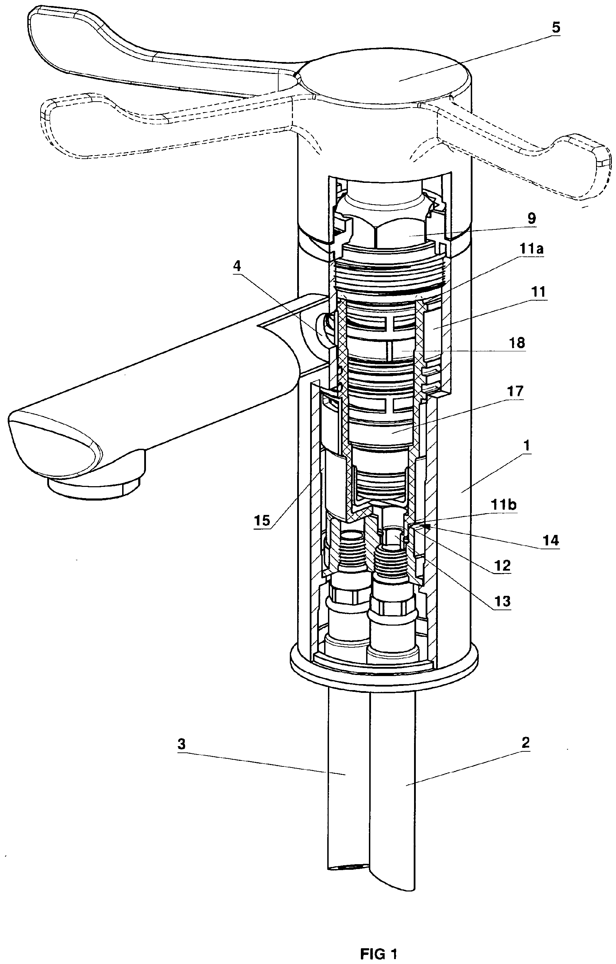

- La figure 1 est une vue en perspective en coupe partielle d'un mitigeur thermostatique séquentiel monocommande selon la présente invention ;

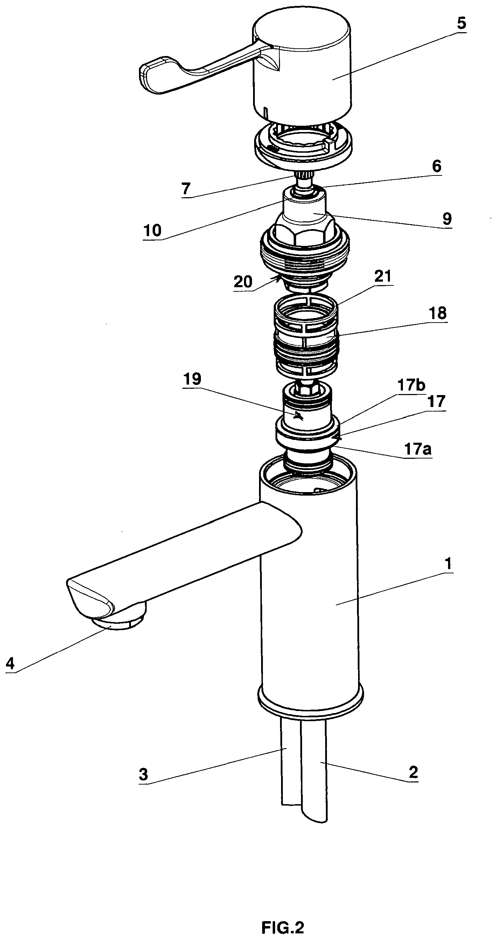

- La figure 2 est une vue éclatée d'un mitigeur thermostatique séquentiel monocommande selon la figure 1 ;

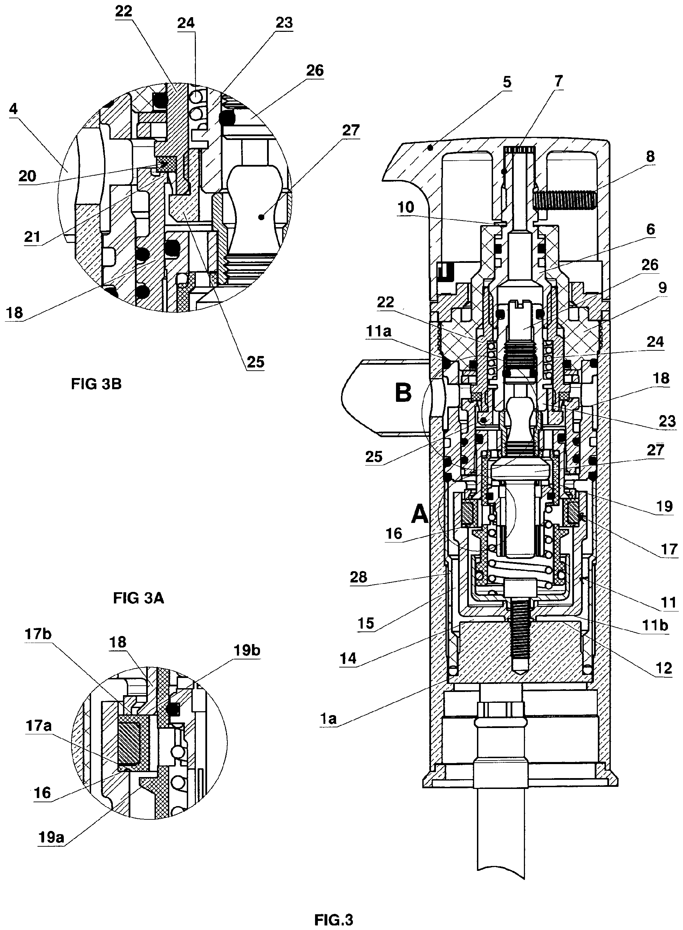

- La figure 3 est une vue en coupe longitudinale axiale d'un mitigeur selon la figure 1 avec le clapet principal en position fermée ;
- La figure 3a est une vue du détail A de la figure 3 à plus grande échelle relatif au siège double face;
- La figure 3b est une vue du détail B de la figure 3 à plus grande échelle relatif au clapet principal ;

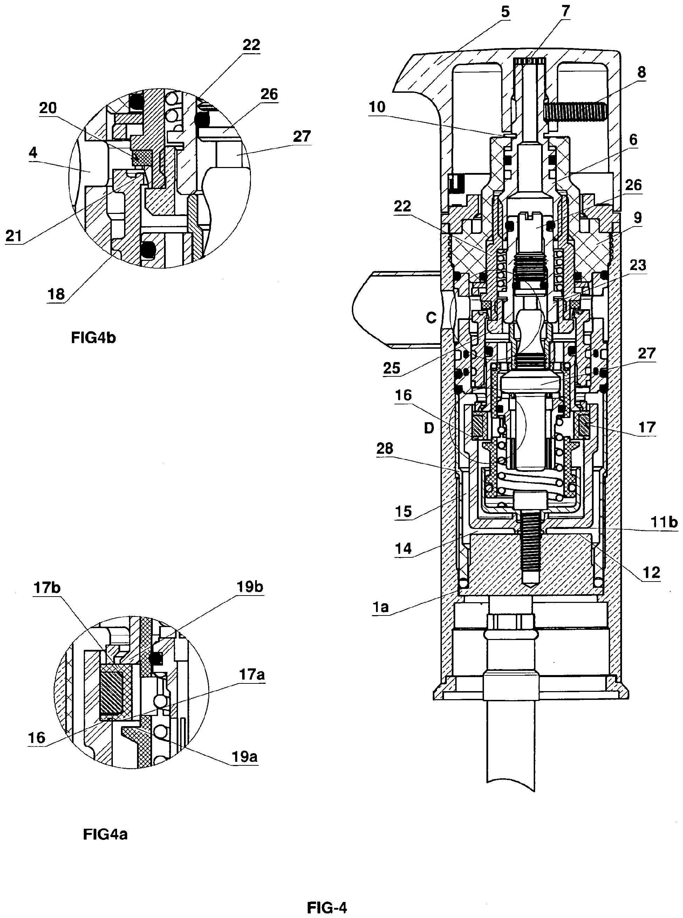

- La figure 4 est une vue en coupe longitudinale axiale d'un mitigeur selon la figure 1 en position ouverte sur l'eau froide ;
- La figure 4a est une vue du détail C de la figure 4 à plus grande échelle relatif au clapet principal ;
- La figure 4b est une vue du détail D de la figure 4 à plus grande échelle relatif au siège double face ;

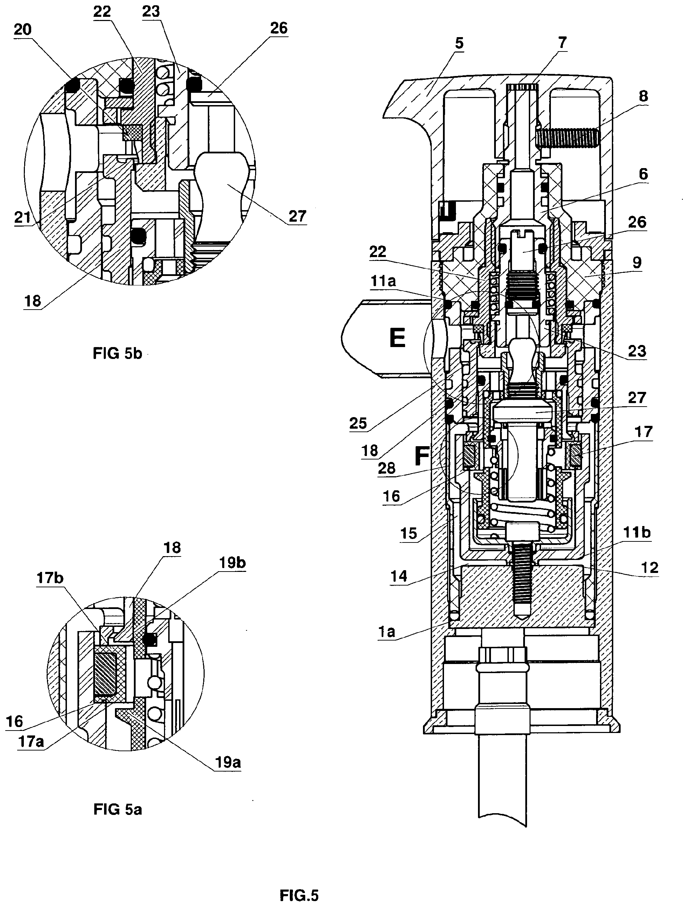

- La figure 5 est une vue en coupe longitudinale axiale d'un mitigeur selon la figure 1 en position ouverte sur l'eau chaude ;
- La figure 5a est une vue du détail E de la figure 5 à plus grande échelle relatif au clapet principal ;
- La figure 5b est une vue du détail F de la figure 5 à plus grande échelle relatif au siège double face.

Afin de donner un sens notamment à des expressions telles que « vers le bas », ou des termes tels que « inférieur », on supposera le mitigeur orienté verticalement comme représenté sur ces figures.

Ainsi qu'on peut le voir sur ces figures, un mitigeur thermostatique monocommande comporte, comme tout robinet mitigeur, un corps (1) du mitigeur, des arrivées d'eau froide (2) et d'eau chaude (3), et une sortie d'eau (4). Il comporte selon la présente invention une seule manette de commande (5) rotative qui est située à la partie supérieure du mitigeur.

Cette manette de commande (5) coopère avec une tige de commande (6) par l'intermédiaire de cannelures axiales (7). Une vis radiale (8) assure le maintient de la manette (5) sur la tige de commande (6).

La tige de commande (6) est disposée de façon axiale dans un corps de tête (9) ; un circlip ou segment d'arrêt (10) disposé dans une gorge de la tige (6) permet d'immobiliser en translation cette tige de commande (6) par rapport au corps de tête (9) qui est rendu solidaire du corps de mitigeur (1) par un filetage.

Le corps de tête (9) vient en appui sur la face supérieure (11a) d'une enveloppe de cartouche (11), l'autre face, inférieure (11b), de cette enveloppe de cartouche venant en appui sur le fond (12) du corps (1) du robinet mitigeur.

Cette face inférieure (11b) comporte une tubulure (13) qui s'engage dans l'arrivée d'eau froide (2) de manière à permettre l'admission de l'eau froide directement à l'intérieur de la partie interne de l'enveloppe de cartouche (11), tandis qu'au regard de l'arrivée d'eau chaude, un espace libre (14) est ménagé entre le fond (12) du mitigeur et la face inférieure de l'enveloppe de cartouche (11) pour laisser librement s'écouler l'eau chaude vers le haut par une chambre (15) ménagée autour de la partie inférieure de l'enveloppe de cartouche (11).

A l'intérieur de l'enveloppe de cartouche (11), il est prévu un épaulement (16) qui reçoit un siège double face (17) dont la face inférieure (17a) est le siège d'admission d'eau froide, tandis que la face supérieure (17b) est le siège d'admission eau chaude.

Une entretoise (18) est disposée entre la face inférieure du corps de tête (9) et la face supérieure (17b) du siège (17) pour garantir l'immobilisation de ce siège double face.

De façon connue, une navette double face (19) est disposée axialement dans ledit siège ; la face inférieure de cette navette faisant office de clapet eau froide (19a) en regard de la face inférieure (17a) du siège (17) et la face supérieure de cette navette faisant office de clapet eau chaude (19b) en regard de la face supérieure (17b) du siège (17) ; un élément thermodilatable (27) est disposé à l'intérieur de la navette (19) pour réguler la température de l'eau mitigée.

De manière évidente pour l'homme de l'art, un ou des passages pour l'eau chaude est ménagé radialement dans l'enveloppe (11) et dans l'entretoise (18) pour permettre à l'eau chaude d'accéder à la face supérieure (17b) du siège (17).

Selon la présente invention, l'eau mitigée qui s'écoule vers le haut dans l'entretoise (18) se trouve stoppée par un clapet (20) qui vient en regard d'un siège d'eau mitigée, ou siège principal (21), ménagé dans la partie supérieure de l'entretoise (18). Le clapet (20) est porté par un porte clapet (22) lequel coopère avec la tige de commande (6) par un filetage. Un guidage tel qu'une cannelure étant ménagé entre ce porte clapet (22) et le corps de tête (9) pour assurer la translation du porte clapet (22) lors de la rotation de la tige de commande (6).

Au moins un orifice est ménagé radialement dans la paroi de l'entretoise (18) au-dessus du siège principal (21) pour permettre à l'eau mitigée de s'écouler radialement au travers de l'enveloppe (11) en regard de la sortie de l'eau (4).

À l'intérieur du porte clapet (22) est disposée une douille de réglage (23) qui s'appuie sur un ressort de fermeture (24) dont l'autre extrémité prend appui à l'intérieur de ce porte clapet (22). Un écrou mâle (25) est vissé dans le porte clapet (22) pour limiter la course de la douille de réglage (23).

Une vis de réglage (26) est disposée dans la douille de réglage (23) et vient en appui sur le piston de l'élément sensible (27) pour permettre le réglage de la température de l'eau en sortie (4). La tige de commande (6) est creuse ce qui permet d'introduire une clé jusqu'à la vis de réglage (26) : en vissant cette vis de réglage on diminue la température de consigne et inversement.

L'ensemble ainsi conçu permet en tournant la manette (5) de fermer dans un premier temps et progressivement le clapet eau chaude (20b) sur la face (17b) du siège (17) tout en augmentant le passage eau froide en regard de la face (17a) du siège (17).

Durant ce temps de fermeture de l'eau chaude, le clapet (20) commence sa descente vers le siège principal (21). Lorsque le passage eau chaude est complètement fermé la navette (19) et l'élément sensible (27) sont immobilisés, mais en continuant la rotation de la manette (5), le porte clapet (22) continue sa descente jusqu'à la fermeture du clapet (20) sur le siège (21) grâce au ressort de compression (24).

Inversement, lorsque l'usager va commander l'ouverture du mitigeur à l'aide de la manette (5), le ressort (24) permettra, dans un premier temps, de maintenir la navette (19) en position plein froid, puis l'ouverture progressive du passage eau chaude au regard de la face (17b) du siège (17) en même temps que la fermeture progressive du passage eau froide au regard de la face (17a) du siège (17).

Selon un mode de réalisation préféré de la présente invention, une chemise (28) en matière isolante peut être disposée à l'intérieur du corps (1) entre le fond (12) intérieur de ce corps et un épaulement (16) ménagé dans la partie médiane de l'enveloppe de cartouche (11), juste au-dessus du passage d'entrée eau chaude : de cette manière, le contact de l'eau chaude avec le corps (1) du robinet sera considérablement réduit, ce qui écartera tout risque de brûlure de l'utilisateur.

Différents joints d'étanchéité sont disposés aux endroits nécessaires, selon toutes précautions connues par l'homme de l'art.

La présente invention, présentée ici verticalement, représente l'application pour un robinet de lavabo sur table; le même mécanisme peut être bien évidemment disposé horizontalement dans le cas d'une robinetterie murale.

## Revendications

1. - Mitigeur thermostatique monocommande à ouverture prioritaire en eau froide puis pour la distribution d'eau sanitaire à une température donnée comprenant, d'une part, un corps (1) muni d'une alimentation en eau froide (2), d'une alimentation en eau chaude (3) et d'une sortie (4) d'eau froide ou à température donnée, et, d'autre part, une manette de commande (5) coopérant avec une tige de commande (6) par l'intermédiaire de cannelures axiales (7), laquelle tige de commande (6) est disposée de façon axiale dans un corps de tête (9), un circlip ou segment d'arrêt (10) disposé dans une gorge de ladite tige de commande (6) permettant d'immobiliser celle-ci en translation par rapport audit corps de tête (9) rendu solidaire dudit corps (1) dudit mitigeur par un filetage dudit corps de tête et venant en appui sur une face supérieure (11a) d'une enveloppe de cartouche (11) dont une autre face, inférieure (11b), vient en appui sur le fond (12) dudit corps (1), ladite face inférieure (11b) comportant une tubulure (13) qui s'engage dans l'arrivée d'eau froide (2) de manière à permettre l'admission de l'eau froide directement à l'intérieur de la partie interne de ladite enveloppe de cartouche (11), tandis qu'en regard de l'arrivée d'eau chaude (3) un espace libre (14) est ménagé entre le fond (12) dudit corps (1) et la face inférieure de ladite enveloppe de cartouche (11) pour laisser s'écouler librement de l'eau chaude vers le haut par une chambre (15) ménagée autour de la partie inférieure de ladite enveloppe de cartouche (11), à l'intérieur de laquelle est prévu un épaulement (16) qui reçoit un siège double face (17) dont la face inférieure (17a) est le siège d'admission d'eau froide et la face supérieure (17b) est le siège d'admission d'eau chaude, une entretoise (18) étant disposée entre la face inférieure du corps de tête (9) et la face supérieure (17b) dudit siège (17) pour garantir l'immobilisation dudit siège double face, une navette double face (19) étant disposée axialement dans ledit siège double face (17), la face inférieure de ladite navette (19) faisant office de clapet d'eau froide (19a) en regard de la face inférieure (17a) dudit siège (17) et la face supérieure de ladite navette (19) faisant office de clapet d'eau chaude (19b) en regard de la face supérieure (17b) dudit siège (17), un élément thermodilatable (27) étant disposé à l'intérieur de ladite navette (19) pour réguler la température de l'eau mitigée, ladite eau mitigée qui s'écoule vers le haut dans l'entretoise (18), se trouvant stoppée par un clapet (20) qui vient en regard d'un siège d'eau mitigée ou siège principal (21) ménagé dans la partie supérieure de ladite entretoise (18), ledit clapet (20) étant porté par un porte-clapet (22) qui coopère avec la tige de commande (6) et à l'intérieur duquel est disposé un ressort (24) dont une extrémité prend appui à l'intérieur dudit porte-clapet (22) et l'autre sur une douille de réglage (23) coulissant dans ledit porte clapet (22) coopérant avec ladite navette (19) de manière à ce que :
- selon un sens d'ouverture du mitigeur à l'aide de la manette (5), dans une première phase, le clapet (20) est ouvert simultanément avec le siège d'admission d'eau froide (17a), grâce à l'appui dudit ressort (24), alors que le siège d'admission d'eau chaude (17b) est fermé par le clapet d'eau chaude (19b) pour permettre l'obtention d'eau froide sans aucun apport d'eau chaude puis, dans une seconde phase, le siège d'eau chaude (17b) est progressivement ouvert tout en réduisant le passage d'eau froide (17a) et
, selon un sens inverse, lors de la fermeture du mitigeur à l'aide de la manette (5), dans une première phase, le siège d'eau chaude est progressivement fermé tout en augmentant le passage d'eau froide afin de fermer l'eau chaude puis, dans une seconde phase, le clapet (20) est fermé afin de fermer l'eau froide.

2. - Mitigeur selon la revendication 1, **caractérisé par le fait qu'**un écrou mâle (25) est vissé dans le porte clapet (22) pour limiter la course de la douille de réglage (23).

3. - Mitigeur selon la revendication 1 ou 2, **caractérisé par le fait qu'**une vis de réglage (26) est disposée dans la douille de réglage (23) et vient en appui sur le piston de l'élément thermodilatable (27).

4. - Mitigeur selon la revendication 1 à 3, **caractérisé par le fait que** le porte-clapet (22) coopère avec la tige de commande (6) par un filetage.

5. - Mitigeur selon l'une quelconques des revendications 1 à 3, **caractérisé par le fait qu'**un guidage tel qu'une cannelure est ménagé entre le clapet (20) et le corps de tête (9) pour assurer la translation du porte-clapet (22) lors de la rotation de la tige de commande (6).

6. - Mitigeur selon selon la revendication 3, **caractérisé par le fait que** la tige de commande (6) est creuse ce qui permet d'introduire une clé jusqu'à la vis de réglage (26).

7. - Mitigeur selon la revendication 1 à 3, **caractérisé par le fait qu'**une chemise (28) en matière isolante peut être disposée à l'intérieur du corps (1) entre le fond (12) intérieur de ce corps et un épaulement (16) ménagé dans la partie médiane de l'enveloppe de cartouche (11), juste au-dessus du passage d'entrée eau chaude (23), de cette manière le contact de l'eau chaude avec le corps (1) du robinet sera considérablement réduit.

## Patentansprüche

1. - Thermostatisches Einhandmischventil für die Öffnung zuerst von kaltem Wasser und danach für die Abgabe von Mischwasser bis zu einer bestimmten Temperatur, umfassend, einerseits, einen Körper (1), der mit einer Kaltwasserversorgung (2), einer Warmwasserversorgung (3) und einem Ausgang (4) von Kaltwasser oder Wasser mit einer bestimmten Temperatur ausgestattet ist, und, andererseits, einem Bedienungsgriff (5), der mit einer Steuerstange (6) mit Hilfe axialer Rillen (7) zusammenarbeitet, wobei die Steuerstange (6) auf axiale Weise in einem Kopfkörper (9) angeordnet ist, wobei ein Sicherungsring oder Anschlagelement (10), angeordnet in einer Kehle der Steuerstange (6), ermöglicht, diese in Translation mit Bezug auf den Kopfkörper (9) zu blockieren, der mit dem Körper (1) des Mischventils durch ein Gewinde des Kopfkörpers fest verbunden ist und auf einer oberen Fläche (11a) einer Patronenhülse (11) in Auflage kommt, von der eine andere, untere Seite (11b) mit dem Boden (12) des Körpers (1) in Auflage kommt, wobei die untere Seite (11b) ein Rohr (13) umfasst, das in den Zulauf von Kaltwasser (2) eingreift, um den Eintritt von Kaltwasser direkt in das Innere des internen Teils der Patronenhülse (11) zu ermöglichen, während gegenüber dem Eintritt von Warmwasser (3) ein freier Raum (14) zwischen dem Boden (12) des Körpers (1) und der unteren Seite der Patronenhülse (11) bereitgestellt ist, um Warmwasser frei nach oben durch eine Kammer (15) ablaufen zu lassen, die um den unteren Teil der Patronenhülse (11) bereitgestellt ist, in deren Inneren ein Absatz (16) vorgesehen ist, der einen doppelseitigen Sitz (17) aufnimmt, dessen untere Seite (17a) der Sitz zum Eintritt von Kaltwasser ist, und deren obere Seite (17b) der Sitz zum Eintritt von Warmwasser ist, wobei ein Abstandshalter (18) zwischen der unteren Seite des Kopfkörpers (9) und der oberen Seite (17b) des Sitzes (17) angeordnet ist, um die Blockierung des doppelseitigen Sitzes zu garantieren, wobei ein doppelseitiges Pendel (19) axial in dem doppelseitigen Sitz (17) angeordnet ist, wobei die untere Seite des Pendels (19) als Kaltwasserklappe (19a) gegenüber der unteren Seite (17a) des Sitzes (17) dient und die obere Seite des Pendels (19) als Warmwasserklappe (19b) gegenüber der oberen Seite (17b) des Sitzes (17) dient, wobei ein thermisch ausdehnbares Element (27) im Inneren des Pendels (19) angeordnet ist, um die Temperatur des Mischwassers zu regeln, wobei das Mischwasser, das im Abstandshalter (18) nach oben abläuft, durch eine Klappe (20) gestoppt wird, die sich gegenüber einem Sitz von Mischwasser oder Hauptsitz (21) befindet, der im oberen Teil des Abstandshalters (18) angeordnet ist, wobei die Klappe (20) von einem Klappenträger (22) getragen wird, der mit der Steuerstange (6) zusammenarbeitet, und in dessen Inneren eine Feder (24) angeordnet ist, von der ein Ende im Inneren des Klappengträgers (22) und das andere Ende auf einer Einstellhülse (23) in Auflage kommt, die im Klappenträger (22) gleitet, der mit dem Pendel (19) derart zusammenarbeitet, dass:
- gemäß einer Öffnungsrichtung des Mischventils mit Hilfe des Griffs (5) in einer ersten Phase die Klappe (20) gelichzeitig mit dem Sitz zum Eintritt von Kaltwasser (17a) dank der Auflage der Feder (24) geöffnet wird, während der Sitz zum Eintritt von Warmwasser (17b) durch die Klappe von Warmwasser (19b) geschlossen wird, um den Erhalt von Kaltwasser ohne jeglichen Eintrag von Warmwasser zu ermöglichen, dann, in einer zweiten Phase, der Sitz von Warmwasser (17b) fortschreitend geöffnet wird, wobei gleichzeitig der Durchgang von Kaltwasser (17a) reduziert wird, und
- gemäß einer umgekehrten Richtung, während des Verschlusses des Mischventils mit Hilfe des Griffs (5) in einer ersten Phase der Sitz von Warmwasser fortschreitend geschlossen wird, wobei geleichzeitig der Durchgang von Kaltwasser erhöht wird, um das Warmwasser zu schließen, dann, in einer zweiten Phase, die Klappe (20) geschlossen wird, um das Kaltwasser zu schließen.

2. - Mischventil nach Anspruch 1, **dadurch gekennzeichnet, dass** eine Überwurfmutter (25) in den Klappenträger (22) geschraubt ist, um den Verlauf der Einstellhülse (23) zu begrenzen.

3. - Mischventil nach Anspruch 1 oder 2, **dadurch gekennzeichnet, dass** eine Einstellschraube (26) in der Einstellhülse (23) angeordnet ist und auf dem Kolben des thermisch ausdehnbaren Elements (27) in Auflage kommt.

4. - Mischventil nach Anspruch 1 bis 3, **dadurch gekennzeichnet, dass** der Klappenträger (22) mit der Steuerstange (6) durch ein Gewinde zusammenarbeitet.

5. - Mischventil nach einem der Ansprüche 1 bis 3, **dadurch gekennzeichnet, dass** eine Führung wie z. B. eine Rille zwischen der Klappe (20) und dem Kopfkörper (9) bereitgestellt ist, um die Translation des Klappenträgers (22) bei der Drehung der Steuerstange (6) sicherzustellen.

6. - Mischventil nach Anspruch 3, **dadurch gekennzeichnet, dass** die Steuerstange (6) hohl ist, wodurch ermöglicht wird, einen Schlüssel bis zur Einstellschraube (26) einzuführen.

7. - Mischventil nach Anspruch 1 bis 3, **dadurch gekennzeichnet, dass** eine Umhüllung (28) aus isolierendem Material im Inneren des Körpers (1) zwischen dem inneren Boden (12) dieses Körpers und einem Absatz (16) angeordnet sein kann, der im mittleren Teil der Patronenhülse (11) bereitgestellt ist, direkt über dem Durchgang zum Eintritt von Warmwasser (23), auf diese Weise wird der Kontakt des Warmwassers mit dem Körper (1) des Wasserhahns beträchtlich reduziert.

## Claims

1. - A single-lever thermostatic mixing valve with priority opening for cold water, then for the distribution of domestic supply water at a given temperature comprising, on the one hand, a body (1) provided with a cold water supply (2), a hot water supply (3) and an outlet (4) for cold water or water at a given temperature, and, on the other hand, a control lever (5) cooperating with a control rod (6) by means of axial splines (7), which control rod (6) is arranged axially in a head body (9), a circlip or retaining ring (10) arranged in a groove of said control rod (6) allowing the latter to be immobilized in translation relative to said head body (9) secured to said body (1) of said mixing valve by a thread of said head body and bearing against an upper face (11a) of a cartridge enclosure (11), another lower face (11b) of which bears against the bottom (12) of said body (1), said lower face (11b) including a tubing (13) that engages in the cold water intake (2) so as to allow the admission of cold water directly inside the inner part of said cartridge enclosure (11), while opposite the hot water intake (3), a free space (14) is arranged between the bottom (12) of said body (1) and the lower face of said cartridge enclosure (11) to allow the free flow of hot water upward through a chamber (15) arranged around the lower part of said cartridge enclosure (11), inside which a shoulder (16) is provided that receives a double-sided seat (17) whose lower face (17a) is the cold water intake seat and the upper face (17b) is the hot water intake seat, a spacer (18) being arranged between the lower face of the head body (9) and the upper face (17b) of said seat (17) to guarantee the immobilization of said double-sided seat, a double-sided shuttle (19) being arranged axially in said double-sided seat (17), the lower face of said shuttle (19) serving as cold water valve (19a) opposite the lower face (17a) of said seat (17) and the upper face of said shuttle (19) serving as hot water valve (19b) opposite the upper face (17b) of said seat (17), a thermodilatable element (27) being arranged inside said shuttle (19) to regulate the temperature of the mixed water, said mixed water, which flows upward in the spacer (18), being stopped by a valve (20) that comes opposite a mixed water seat or main seat (21) arranged in the upper part of said spacer (18), said valve (20) being carried by a valve holder (22) that cooperates with the control rod (6) and inside which a spring (24) is arranged, one end of which bears inside said valve holder (22) and the other end of which bears on an adjusting sleeve (23) sliding in said valve holder (22) cooperating with said shuttle (19) such that:
- in an opening direction of the mixing valve using the lever (5), in a first phase, the valve (20) is opened simultaneously with the cold water intake seat (17a), owing to the bearing of said spring (24), while the hot water intake seat (17b) is closed by the hot water valve (19b) to make it possible to obtain cold water without any contribution of hot water then, in a second phase, the hot water seat (17b) is gradually opened while reducing the cold water passage (17a), and
- in an opposite direction, during the closing of the mixing valve using the lever (5), in a first phase, the hot water seat is gradually closed while increasing the passage of cold water in order to close the hot water, then, in a second phase, the valve (20) is closed in order to close the cold water.

2. - The mixing valve according to claim 1, **characterized in that** a male nut (25) is screwed into the valve holder (22) to limit the travel of the adjusting sleeve (23).

3. - The mixing valve according to claim 1 or 2, **characterized in that** an adjusting screw (26) is arranged in the adjusting sleeve (23) and bears against the piston of the thermodilatable element (27).

4. - The mixing valve according to claim 1 to 3, **characterized in that** the valve holder (22) cooperates with the control rod (6) by a thread.

5. - The mixing valve according to any one of claims 1 to 3, **characterized in that** a guide such as a spline is arranged between the valve (20) and the head body (9) to ensure the translation of the valve holder (22) during the rotation of the control rod (6).

6. - The mixing valve according to claim 3, **characterized in that** the control rod (6) is hollow, which allows a key to be inserted up to the adjusting screw (26).

7. - The mixing valve according to claim 1 to 3, **characterized in that** a jacket (28) made from an insulating material may be arranged inside the body (1) between the inner bottom (12) of this body and a shoulder (16) arranged in the median part of the cartridge enclosure (11), just above the hot water inlet passage (23), owing to which the contact of the hot water with the body (1) of the tap will be considerably reduced.
